# EUROPEAN PATENT APPLICATION

(11) **EP 2 319 852 A1**
(43) Date of publication of application: **11.05.2011**
(21) Application number: 09382210.4
(22) Date of filing: 16.10.2009
(51) Int. Cl.: C07F 9/50, B01J 31/24

(54) **Triphenylphosphine derivatives**

(71) Applicant: Universitat Autònoma De Barcelona, 08193 Barcelona (ES)
(72) Inventor: Peral Crespo, Daniel, E-08193 Bellaterra - Barcelona (ES); Bayón Rueda, Juan Carlos, E-08193 Bellaterra - Barcelona (ES)
(74) Representative: ABG Patentes, S.L.

(57) **Abstract**

The present invention relates to a triphenylphosphine of Formula (I)

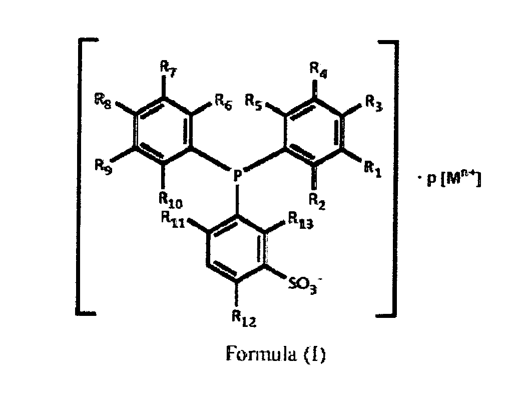

## Description

### FIELD OF THE INVENTION

The present invention relates to new phosphine compounds, more particularly to substituted triphenylphosphines, a process for obtaining the same and their use as ligands in the catalysis field and other several applications.

### BACKGROUND OF THE INVENTION

Phosphines are among the most widely ligands used in homogeneous catalysis. These trivalent phosphorus compounds stand out from other metal ligands *inter alia* because they are, in principle, easily modified by a well-established chemistry. In this regard, the stereoelectronic tuning of the ligands is key in order to optimize a given catalyzed transformation.

It is known that arylphosphines are more stable against oxidation than alkylphosphines. Likewise, arylphosphines are weak sigma electron donors compared to the alkylphosphines. Further, the presence of electron-withdrawing (electronegative) groups such as trifluoromethyl on the aryl rings of a phosphine decreases the sigma-donating capacity of the ligand, and at the same time, provides an increase in backbonding ability, decreasing as a whole the electron density on the phosphorus atom. This fact may facilitate coordination and/or dissociation of the ligand to metal center, depending on the rest of ligands presented in the area of the metal, changing the rate of one or more of the various steps comprised in a catalytic cycle. Therefore, phosphines can exhibit a range of sigma donor and pi-acceptor capabilities, and the electronic properties of a metal center in a coordination complex of a metal with phosphines can be tuned by the substitution of electronically different phosphines.

Further, the incorporation of sulfonated groups into the structure of the ligands allows the development of biphasic catalytic reactions. The use of sulfonated phosphine metal complexes as catalysts in such reactions allow the separation of the reaction products from the catalyst and then reuse the latter, as in the case of heterogeneous catalysts, without losing the characteristic selectivity of the molecular or ionic catalysts in homogeneous phase. Biphasic processes require that the catalyst is soluble in only one phase, while the substrates and products remain in the other. In this sense, sulfonated groups allow to retain the catalyst preferentially in polar phases, such as water or ionic liquids, while substrates and products remain in a non-polar phase and are separated at the end of the reaction, for example by simple decantation. Although the system formed by water-organic solvent is undoubtedly the most studied solvent combination in catalytic reactions with sulfonated phosphines, also applications of this type of ligands in biphasic catalysis, such as semipolar solvent-organic solvent, ionic liquid-organic solvent or ionic liquid-supercritical CO₂ among others, have also been disclosed.

Sulfonated phosphines, particularly triphenylphosphine monosulfonate (TPPMS) and triphenylphosphine trisulfonate (TPPTS), have been used as ligands in many catalytic reactions such as hydroformylation, carbon-carbon cross-coupling, selective hydrogenation, Heck reaction and telomerisation. The most important industrial process that uses this type of ligands, namely water-soluble organometallic complexes comprising TPPTS as ligand, is the Ruhrchemie - Rhône Poulenc process for hydroformylation of propene and to a lesser scale of 1-butene. Monosulfonated phosphines, such as TPPMS are used in the preparation of different fine chemicals. For instance, TPPMS is used by Kuraray for the preparation of nonadienol.

However, the sulfonation reaction commonly used in the preparation of sulfonated triphenylphosphines requires a strict control of the working conditions since the overexposure of the phosphine to fuming sulfuric acid (oleum) may give place to undesired polysulfonation and oxidation products.

To the best of the knowledge of the inventors, there are only two references related to triphenylphosphines which have fluorinated and sulfonated groups on the phenyl rings.

Fell and colleagues were able to introduce sulfonic groups in aromatic rings slightly deactivated by the presence of fluorine atoms as depicted in figure 1 (Fell, B. and Papadogianakis, G. J. Prakt. Chem., 1994, 336, 591). However, long reaction times were required and it was not possible to obtain the pure ligands. The mixture of the di-and trisulfonated products was used in the biphasic hydroformylation of *n*-hexene catalyzed by rhodium, giving better regioselectivity towards linear aldehyde than their non-fluorinated sulfonated counterparts.

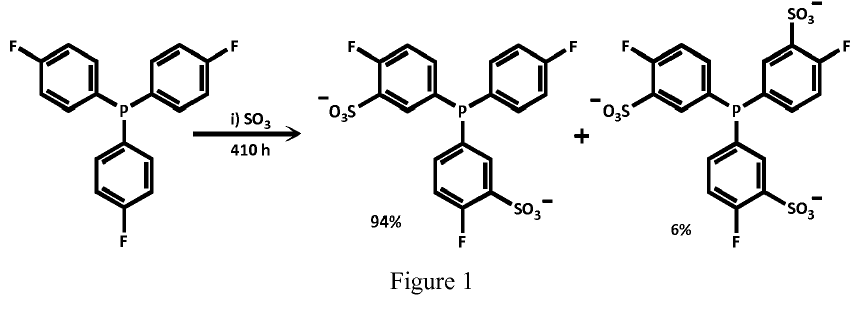

In 2006, Gulyás and colleagues published the synthesis and catalytic application of the ligand depicted in figure 2 (Gulyas, H.; Bacsik, Z.; Szollosy, A.; Bakos, J. Adv. Synth. Catal, 2006, 348, 1306). This ligand is the only example described of a sulfonated phosphine containing electro-withdrawing CF₃ groups. However, the presence of an electro-donating methoxy group in the sulfonated ring, which is essential in the synthetic strategy used by the authors, reduces the acidic properties of the phosphine. This phosphine is insoluble in water but soluble in ionic liquids, allowing its use in non-water based liquid-liquid biphasic catalysis.

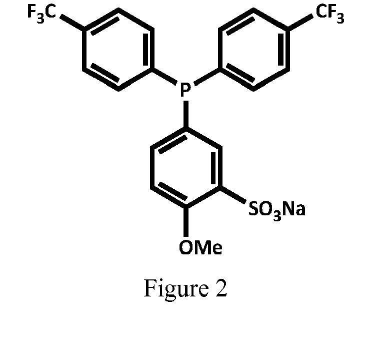

It is therefore necessary to solve the problems associated with the phosphines belonging to the above state of the art and provide new phosphine ligands which show a strong 1t-acid character and simultaneously they are able to be used under liquid-liquid biphasic conditions both water-based and non aqueous in catalytic process. Advantageously, said ligands must be also readily synthesized in pure form.

### SUMMARY OF THE INVENTION

The present invention provides substituted triphenylphosphines containing at least one phenyl ring substituted with a sulfonic group and at least another phenyl ring with one or more trifluoromethyl groups without any electro-donating groups. These new phosphines show a high electro-withdrawing effect, which may be fine-tuned by varying the phenyl ring substitution pattern and this favors their use as ligands in metal catalysed reactions. Likewise, the phosphines disclosed herein have a good water solubility and therefore they are suitable for the development of catalytic reactions in water-based biphasic systems. Furthermore, the stability against the oxidation of these phosphines is remarkable in comparison to other sulfonated phosphines reported in the state of the art such as TPPMS or TPPDS. Moreover, the phosphines of the invention are obtained in good quality and yield as it is described latter in this specification.

Therefore, in a first aspect, the present invention is directed to novel triphenylphosphines of Formula (I) (also referred to as the compounds or phosphines of the invention) 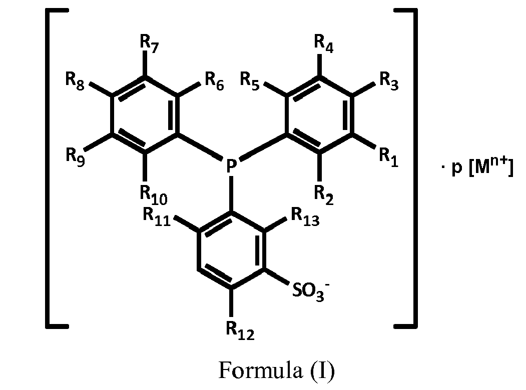 wherein
M is a proton or a monovalent or divalent cation,
n is an integer selected from 1 and 2,
p takes a value selected from ½, 1 and 2,
R₁ is selected from H, C₁-C₆ alkyl, CF₃ and SO₃⁻,
R₁₁, R₁₂ and R₁₃ are independently selected from Hand C₁-C₆ alkyl, with the proviso that
   if R₁ is SO₃⁻, then
      the product of n and p is equal to 2,
      R₂, R₃ and R₅ are independently selected from H and C₁-C₆ alkyl, R₄ is H,
      R₆-R₁₀ are independently selected from H, C₁-C₆ alkyl and CF₃,
      at least one of R₆-R₁₀ being CF₃;
   if R₁ is not SO₃⁻, then
      the product of n and p is equal to 1,
      R₁-R₁₀ are independently selected from H, C₁-C₆ alkyl and CF₃,
      at least one of the groups R₁-R₁₀ being CF₃.

In another aspect, the present invention is directed to a process for obtaining a tryphenylphosphine of Formula (I), which comprises the reaction between a compound of Formula (II) 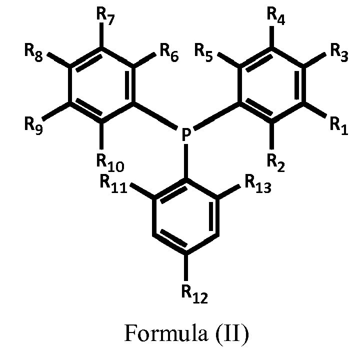 wherein
R₁-R₁₀ are independently selected from H, C₁-C₆ alkyl and CF₃, at least one of the groups R₁-R₁₀ being CF₃,
R₁₁, R₁₂ and R₁₃ are independently selected from Hand C₁-C₆ alkyl, and a sulfonation reagent in presence of a Lewis acid.

In another aspect, the present invention is directed to novel triphenylphosphines of Formula (I) obtainable by the above mentioned process.

The use of a Lewis acid as an additive allows the direct sulfonation of trifluoromethylated triphenylphosphines since it is able to interact with the lone electron pair of the phosphine's phosphorous atom, preventing its oxidation.

Other aspects of the invention are the uses of the triphenylphosphines of Formula (I). In this regard, the phosphines of the invention are particularly useful as metal ligands in different organic transformations catalysed or promoted by metal complexes, preferably in biphasic systems, most preferably in water-based biphasic systems, but also in biphasic systems were the polar phase is an ionic liquid or other polar media. The catalytic reactions can be also carried out in homogenous phase, provided that a polar solvent is used in which the catalyst and the reagents are soluble. In this case, the catalyst can be recovered at the end of the reaction by adding water and extracting the catalyst into the aqueous phase. The phosphines of Formula (I) are also useful in the stabilization of metallic nanoparticles, which can be employed in several applications such as catalysis, therapy, medical diagnosis, etc.

These and further aspects of the invention are defined in the claims.

### DETAILED DESCRIPTION OF THE INVENTION

In the above definition of compounds of Formula (I) the following terms have the meaning indicated:
C₁-C₆ alkyl refers to a straight or branched hydrocarbon chain radical consisting of carbon and hydrogen atoms, containing no unsaturation, having one to six, preferably one to four carbon atoms, and which is attached to the rest of the molecule by a single bond, e. g., methyl, ethyl, n-propyl, i-propyl, n-butyl, t-butyl, n-pentyl, etc. Preferred alkyl radicals in the present invention are selected from methyl, ethyl and n-propyl.

The cation in Formula (I) is selected in such a way that the general charge of Formula (I) is neutral. Therefore, the invention also provides salts of compounds of Formula (I). For instance, salts of compounds provided herein are synthesized from the parent compound which contains an acidic moiety by conventional chemical methods. Generally, such salts are, for example, prepared by reacting the free sulfonic acid group or groups with a stoichiometric amount of the appropriate base in water or in an organic solvent or in a mixture of the same.

Examples of the addition salts include inorganic salts wherein the cation is selected from monovalent or divalent cations selected from the group comprising of alkaline elements, alkaline earth elements, Cu⁺, Ag⁺, Au⁺ and cations of the formula R₁₄R₁₅R₁₆ R₁₇N+ wherein R₁₄, R₁₅, R₁₆ and R₁₇ are selected from the group comprising hydrogen and C₁-C₄ alkyl groups which are optionally substituted, for example by one or more hydroxyl groups. More preferably the cations are select from the group comprising, sodium, potassium, calcium, ammonium cations such as, those derived from, for example, ethylenediamine, ethanolamine, N,N-dialkylenethanolamine, triethanolamine and basic aminoacids salts. Preferred salts of the compounds of the invention are sodium salts.

The compounds of the invention may be in amorphous or crystalline. The crystalline compounds either may be in the form of free compounds or in the form of solvates thereof (e.g. hydrates, alcoholates, particularly methanolates) and it is intended that both forms are within the scope of the present invention. Methods of solvation are generally known within the art. The compounds of the invention may present different polymorphic forms, and it is intended that the invention encompasses all such forms.

Unless otherwise stated, the compounds of the invention are also meant to include compounds which differ only in the presence of one or more isotopically enriched atoms. For example, compounds having the present structures except for the replacement of hydrogen by deuterium or tritium, or the replacement of a carbon by a ¹³C- or ¹⁴C-enriched carbon or ¹⁵N-enriched nitrogen are within the scope of this invention.

As introduced above, the present invention is directed to novel triphenylphosphines of Formula (I). In a particular embodiment, the present invention is directed to triphenylphosphines of Formula (I') 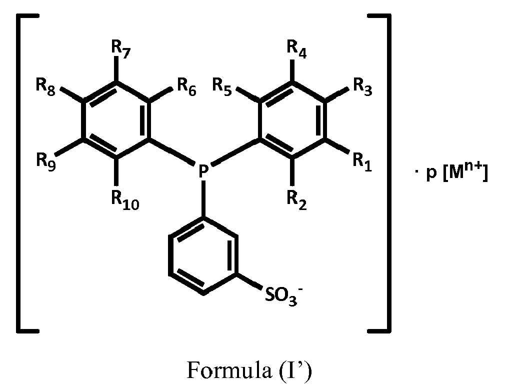 wherein
M is a proton or a monovalent or divalent cation,
n is an integer selected from 1 and 2,
p takes a value selected from ¹/₂, 1 and 2,
R₁ is selected from H, CF₃ and SO₃⁻,
with the proviso that
if R₁ is SO₃⁻, then the product of n and p is equal to 2, R₂-R₅ are H and R₆-R₁₀ are independently selected from H and CF₃, at least one of R₆-R₁₀ being CF₃;
if R₁ is not SO₃, then the product of n and p is equal to 1, R₁-R₁₀ are independently selected from H and CF₃, at least one of the groups R₁-R₁₀ being CF₃.

Depending on the sulfonation degree, the phosphines of Formula (I) can be divided into two groups:

### a) Trifluoromethylated disulfonated phosphines of Formula (Ia)

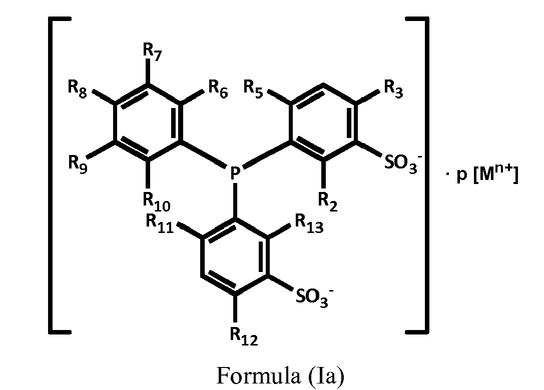

wherein
M is a proton or a monovalent or divalent cation,
n is an integer selected from 1 and 2,
p takes a value selected from 1 and 2,
R₂, R₃, R₅, R₁₁, R₁₂ and R₁₃ are independently selected from H and C₁-C₆ alkyl, R₆-R₁₀ are independently selected from H, C₁-C₆ alkyl and CF₃, at least one of R₆-R₁₀ being CF₃.

In a particular embodiment of Formula (Ia), R₂, R₃, R₅, R₁₁, R₁₂ and R₁₃ are H and R₆-R₁₀ are independently selected from H and CF₃, at least one of R₆-R₁₀ being CF₃.

Preferred phosphines of Formula (Ia) are those depicted below:

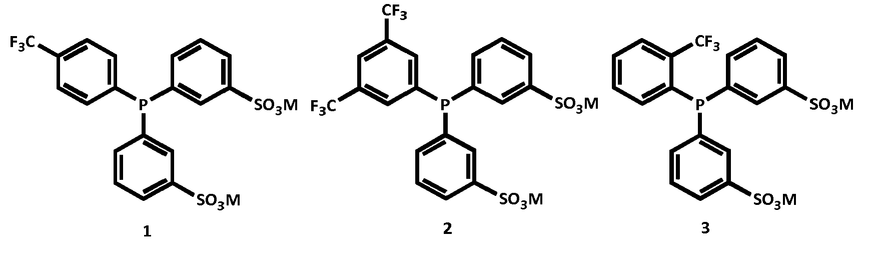

### b) Trifluoromethylated monosulfonated phosphines of Formula (Ib)

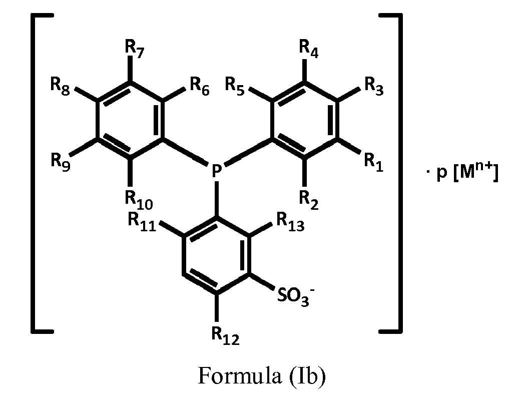

wherein
M is a proton or a monovalent or divalent cation,
n is an integer selected from 1 and 2,
p takes a value selected from ½ and 1,
R₁₁, R₁₂ and R₁₃ are independently selected from Hand C₁-C₆ alkyl,
R₁-R₁₀ are independently selected from H, C₁-C₆ alkyl and CF₃, at least one of the groups R₁-R₁₀ being CF₃.

In a particular embodiment of Formula (Ib), R₁₁, R₁₂ and R₁₃ are H and R₁-R₁₀ are independently selected from H and CF₃, at least one of the groups R₁-R₁₀ being CF₃.

Preferred phosphines of Formula (Ib) are those depicted below:

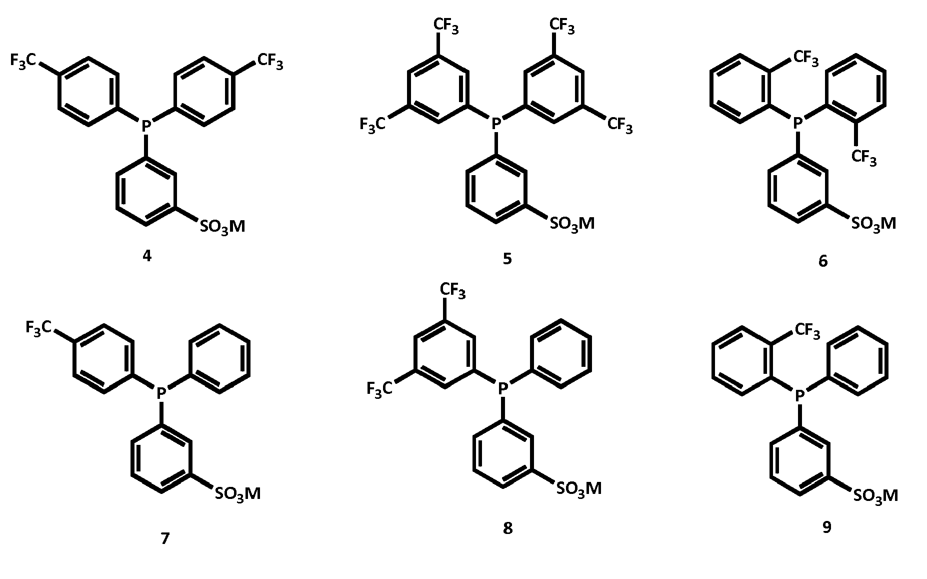

Phosphines of Formula (Ib) may be divided in turn into another two groups: those having two trifluoromethylated rings (such as phosphines 4, 5 and 6) and those having only one trifluoromethylated ring (such as phosphines 7, 8 and 9).

In another particular embodiment, M is selected from a proton, sodium, potassium, calcium, an ammonium cation such as, those derived from, for example, ethylenediamine, ethanolamine, N,N-dialkylenethanolamine, triethanolamine and basic aminoacids salts. Preferred salts of the compounds of the invention are sodium salts.

In additional preferred embodiments, the preferences described above for the different substituents are combined. The present invention is also directed to such combinations of preferred substitutions in the Formula (I) above.

Due to the substitution on the phenyl rings with CF₃ and SO₃M groups these new phosphines show a high π-acid character. In this regard, it should be noted that the electron-withdrawing capacity of a CF₃ group is much higher than that of a F atom, as is shown by the fact that the phenyl rings in P(*p*-C₆H₄F)₃ are reactive in electrophilic substitution with oleum, while phosphines with three phenyl rings substituted with CF₃ are not. It is known that a strong π-acid character is especially favorable for a number of catalytic processes. In particular, in the hydroformylation of 1-alkenes higher rates and higher selectivities towards the linear aldehyde have been reported for some of the phosphines of Formula (II) when compared with triphenylphosphine.

Further, these phosphines present in general good solubility in water. Particularly, phosphines of Formula (Ia), i.e. disulfonated phosphines (such as phosphines 1, 2 or 3) and phosphines of Formula (Ib) having only one ring trifluromethylated (such as phosphines 7, 8 and 9) are freely soluble in water (typically equal or above 3 g/100 mL), whilst phosphines of Formula (Ib) having two rings trifluoromethylated (such as phosphines 4, 5 and 6) are moderately soluble in water (typically about 1 g/100 mL, for instance between 0.2 and 1.2 g/100 mL).

Moreover, because the low basicity of these phosphines, they are significantly more robust against aerial or other type of oxidation than the corresponding phosphines without trifluoromethyl substituents. For instance, while 5·10⁻² mM aqueous solution of sulfonated phosphines NaTPPMS and Na₂TPPDS readily oxidize in the air at room temperature (about 5% in 16 h), the same solutions of several phosphines of the invention are completely stable for at least a period of 16 h. This stability could be important in catalytic processes and particularly in those involving recycling of the catalytic species.

Several synthetic processes have been tried in order to prepare the new phosphines of Formula (I). Common sulfonation conditions by means of a direct electrophilic aromatic substitution did not yield the desired sulfonated products producing only a mixture of the starting materials and the phosphine oxide whereas other synthetic routes did not give place to any reaction. Finally, the synthesis of the phosphines of Formula (I) was conveniently achieved by protecting the phosphorus atom against oxidation which allows the use of severe sulfonation conditions. More specifically, the sulfonation over trifluoromethylated triphenylphosphines in presence of a Lewis acid as protecting agent avoids the oxidation of the phosphorus atom. This process of sulfonation is disclosed in US 5,451,698.

A Lewis acid is a molecular entity (and the corresponding chemical species) that is an electron-pair acceptor and therefore able to react with a Lewis base such as the phosphorus atom in phosphines to form a Lewis adduct, by sharing the electron pair furnished by the Lewis base. Examples of Lewis acids include: boric acid, halides of boron and other halides (such as of aluminium, phosphorus, antimony, arsenic, iron, zinc, and tin). The Lewis acid used in the process for obtaining the phosphines of the invention is preferably a boron compound. Most preferably, said Lewis acid is boric acid B(OH)₃ which is an inexpensive material, commercially available.

The amount of Lewis acid preferably ranges from about 2 to about 10 equivalents for each equivalent of phosphine to be sulfonated, most preferably from about 4 to about 8 equivalents. In general, about 4 equivalents of Lewis acid are suitable for the reaction occurs.

Conveniently, a solution of the Lewis acid is prepared by dissolving the acid in concentrated sulfuric acid, such as H₂SO₄ 95 wt. % followed by deoxygenation, for example, by nitrogen bubbling. Next, the starting phosphine of Formula (II) is dissolved portion-wise into the above solution. This step is carried out preferably at a temperature of about 0 °C which may be maintained during the addition of the sulfonation reagent. Sulfonation reagents include: fuming sulfuric acid, stabilized SO₃, such as amine-stabilized SO₃, pyridine-stabilized SO₃, trimethylsilyl sulfonyl chloride, commercially available SO₃ and mixtures thereof. In a preferred embodiment, said sulfonation reagent is oleum or fuming sulfuric acid (H₂SO₄/SO₃). Concentrations of oleum are usually either expressed in terms of % SO₃ by weight (called % oleum) or as % H₂SO₄ (the amount obtained when H₂O is added). Common concentrations and suitable for the present invention are from 20% to 65% oleum such as 20% oleum (104.5% H₂SO₄), 40% oleum (109% H₂SO₄) and 65% oleum (114.6% H₂SO₄). The most preferred concentration is 65% oleum. Further, the oleum is typically added in an amount from about 20 to about 120 equivalents of SO₃ for each equivalent of phosphine to be sulfonated, for example about 20, about 30, about 40, about 50, about 60, about 70, about 80, about 90, about 100, about 110 or about 120 equivalents. During the addition of the sulfonation reagent temperature is preferably kept low, for example at about 0 °C, while it is vigorously stirred to provide an uniform mixture.

The sulfonation typically proceeds at room temperature. It has shown that temperatures above about 25 °C may yield phosphorus oxidation products. The progress of the reaction may be conveniently monitored by ³¹P{¹H} NMR, which makes possible the easy differentiation of the trivalent and pentavalent phosphorus species in the crude reaction mixture. ³¹P{¹H} NMR experiments can be carried out in accordance with established literature. For example, a small aliquot is taken from the mixture and then it is dissolved in a suitable solvent, such as a mixture of methanol:D₂O (0.9 ml:0.1 ml), in such a way that all species are dissolved. The spectra may be conveniently calibrated using 85% H₃PO₄. As soon as the desired phosphine is obtained, an usual work-up affords the same in good yield and purity. The rate of sulfonation depends on several factors such as reaction times or the steric hindrance of the starting phosphine. In this respect, triphenylphosphines substituted with CF₃ groups in para positions provides shorter reaction times (even only 1 h) whereas the reactivity of phosphines substituted with orto-trifluoromethylphenyl groups is lower. In any case, the process disclosed herein allows a prompt access to phosphines of Formula (I).

Briefly, from an experimental standpoint, the process for obtaining a tryphenylphosphine of Formula (I) comprises:
- dissolving the Lewis acid into concentrated sulfuric acid;
- dissolving the starting phosphine of Formula (II) into the acid solution formed in the previous step, preferably portion-wise and at about 0 °C;
- adding the sulfonation reagent, preferably drop-wise and at about 0 °C;
- quenching the reaction by slowly adding the reaction mixture to water, which has preferably been degased; and
- when it is desired to obtain the compound in the form of a salt, neutralizing the mixture with an appropriate base.

The starting phosphines of Formula (II) may be easily prepared following well-known procedures in the state of the art [e.g. Miller, G.R.; Yankowsky, A.W.; Grim, S.O., J. Chem. Phys., 1969, 51, 3185; Adams, D. J.; Bennett, J.A.; Cole-Hamilton, D.J.; Hope, E.G.; Hopewell, J.; Kight, J.; Pogorzelec, P.; Stuart, A.M., Dalton Trans., 2005, 24, 3862; Zhmurova, I. N.; Kirsanov, A. V., Zhurnal Obshchei Khimii, 1966, 7, 1248]. These procedures may firstly comprise a metal/halide exchange between a trifluoromethylated aryl halide and an organometallic reagent (for instance, with an organolithium or organomagnesium reagent). Subsequently, the intermediate formed reacts with a chlorodiarylphosphine (stoichiometric relationship 1 : 1 ) or a dichloroarylphosphine (stoichiometric relationship 2:1). In the latter case, the sequential addition of two different arylorganometallic compounds may give place to a phosphine of Formula (II) comprising three different aryl rings. Said sequential addition preferably comprises the isolation of the chlorodiarylphosphine obtained from the first reaction, before adding the second arylorganometallic compound. Chlorodiarylphosphines and dichlorodiarylphosphines are commercial products or can be prepared following well known procedures [e.g. Liddle, S.T.; Izod, K., Organometallics, 2004, 23, 5550; Whitaker, C.M.; Kott, K.L.; McMahon, R.J., Journal of Organic Chemistry, 1995, 60, 3499].

The phosphines of the present invention may show great application as ligands in various catalyzed or promoted chemical transformations by metal complexes such as hydrogenation; hydrosilylation; carbon-carbon and carbon-heteroatom double bond hydroboration; alkene hydroamination; alkene and diene telomerization, oligomerization and polymerization; alkene and diene isomerization, hydrocyanation, hydroformylation and hydrocarboxylation; aryl and vinyl halide and alcohol carbonylation; hydratation reactions, notably of nitriles, alkynes and alkenes; carbon-carbon and carbon-heteroatom cross-coupling reactions. As described, these ligands are easy to synthesize and also to be modified depending on the number and position of the C₁-C₆ alkyl, CF₃ and SO₃⁻ groups to enhance the catalytic activity of metals such as rhodium or palladium. This variation both in electronic and steric properties is required in order to achieve the most suitable ligand for each process.

Further, the resistance to oxidation of the phosphines of the invention allows their use under oxidant conditions and reactions.

The ligands of the invention may be used in homogenous catalysis, provided that a polar solvent is used in which the catalyst and the reagents are soluble. In this case, the catalyst can be recovered at the end of the reaction by adding water and extracting the catalyst into the aqueous phase. The water-soluble ligands of the invention are particularly advantageous when used in biphasic catalytic systems, improving the efficiency of product isolation and catalyst recovery which is achieved by simply removing the aqueous phase from the organic phase. The ligands are also suitable for any other biphasic catalytic system containing a polar phase, such as an ionic liquid.

Likewise, the phosphines of the present invention may also be used in the preparation and stabilization of metal nanoparticles or clusters in polar media, which have different applications such as catalysis, therapy or medical diagnosis.

The use of metal clusters in conventional homogenous processes has been widely studied because they are considered to have properties intermediate between homogenous and heterogeneous catalysts. As a cluster consists of several metal atoms, activation of an organic substrate may take place at more than one metal atom and this can have a profound effect on the activity. The synthesis of water-soluble clusters may be achieved by the replacement of one or more labile ligands with the water-soluble phosphine ligand of the invention in a suitable solvent.

Protective agents are imperative for the stabilization of nanostructured metals and for prevention of their coagulation. In this respect, phosphines act as protective shields on the metallic surface and thus the nanometallic cores are separated from each other. For example, the metal nanoparticles formed by the phosphines of the invention may be used as diagnostic or therapeutic radiopharmaceuticals.

The invention will be further illustrated by means of examples. These should be interpreted merely as illustrative of the invention.

### EXAMPLES

### 1. Preparation of the trifluoromethylated phosphines of Formula (II) precursors of phosphines 1-9

The starting material is a phenyl halide containing at least one trifluoromethyl group in its structure: 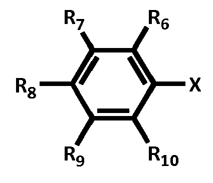 wherein
X is F, Cl or Br,
R₆-R₁₀ are independently selected from H or CF₃, at least one of the groups R₆-R₁₀ being CF₃,

When R₆, R₁₀ or both of them are CF₃, the phenyl halide (22.4 mmol) was dissolved in diethyl ether (30 ml) and cooled down to 0°C. *n*-BuLi (2.5 M in hexane, 22.3 mmol) was added dropwise and the reaction mixture was stirred for one hour. A solution of chlorodiphenylphosphine (19.9 mmol) or dichlorophenylphosphine (10.3 mmol) in Et₂O (10 ml) was added to the lithium derivative. After the addition, the reaction mixture was allowed to warm up slowly to room temperature and stirred for 3 hours.

When R₆ and R₁₀ are not CF₃, the phenyl halide (34.1 mmol) was dissolved in Et₂O (50 ml) and added into a magnesium (51.0 mmol) suspension in Et₂O (50 ml) at 0°C. The mixture was refluxed during 2 hours and the magnesium excess was filtered via canula. A solution of chlorodiphenylphosphine (31.0 mmol) or a dichlorophenylphosphine (15.9 mmol) in Et₂O (10ml) was slowly added to the Grignard solution and the mixture was refluxed for 2 hours.

The general work up involved the addition of a hydrochloric acid solution (10%). After the phase separation, the organic phase was washed with water, dried over MgSO₄, and the solvent was removed in vacuo. The products were purified by gel chromatography or with a reduced pressure distillation.

### 2. Preparation of trifluoromethylated sulfonated phosphines of Formula (I)

Phosphines 1-9 wherein M is Na⁺ were synthesized according to the following general procedure:
Boric acid was dissolved into concentrated sulfuric acid (95% w/w) and N₂ was bubbling for 15 min in order to prevent the presence of oxygen in the reaction mixture.
Under N₂ atmosphere, the starting phosphines of Formula II were dissolved into the acid solution portion-wise at 0 °C. Once the phosphines were completely dissolved,
fuming sulfuric acid comprising SO₃ 65% was added drop-wise for 1 h keeping the reaction temperature at 0°C.

The reaction was allowed to reach room temperature and aliquots were taken at different times and analyzed by ³¹P{¹H} NMR to monitor the progress of the same. Once obtained the desired sulfonation degree, the reaction was quenched pouring the reaction mixture into frozen and deoxygenated water at 0°C (50% w/w). Then, it was neutralized with a solution of deoxygenated NaOH keeping the temperature below 10 °C. Water was evaporated affording a mixture of inorganic salts and phosphines which were extracted with methanol. Then, the methanol was evaporated and the product was washed with CH₂C1₂ to remove possible unreacted starting material or by-products. Recrystallization, from water in the case of monosulfonated phosphines (formula Ib) and from methanol in the case of disulfonated phosphines (formula Ia), afforded the desired sulfonated phosphine as a white solid.

The amounts of the reagents (expressed as equivalents for each equivalent of starting phosphine) and reaction times are showed below.

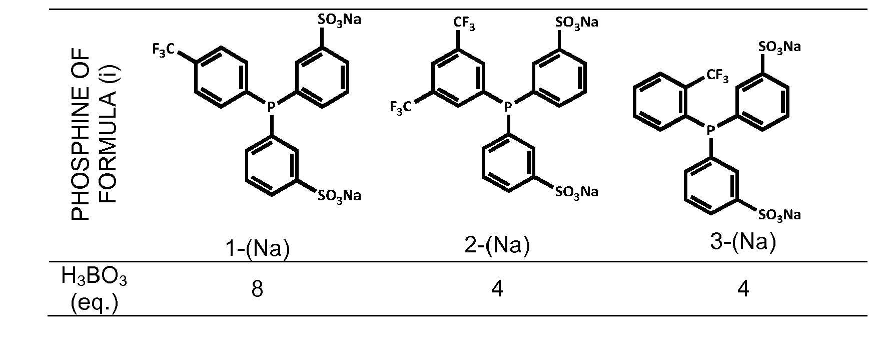

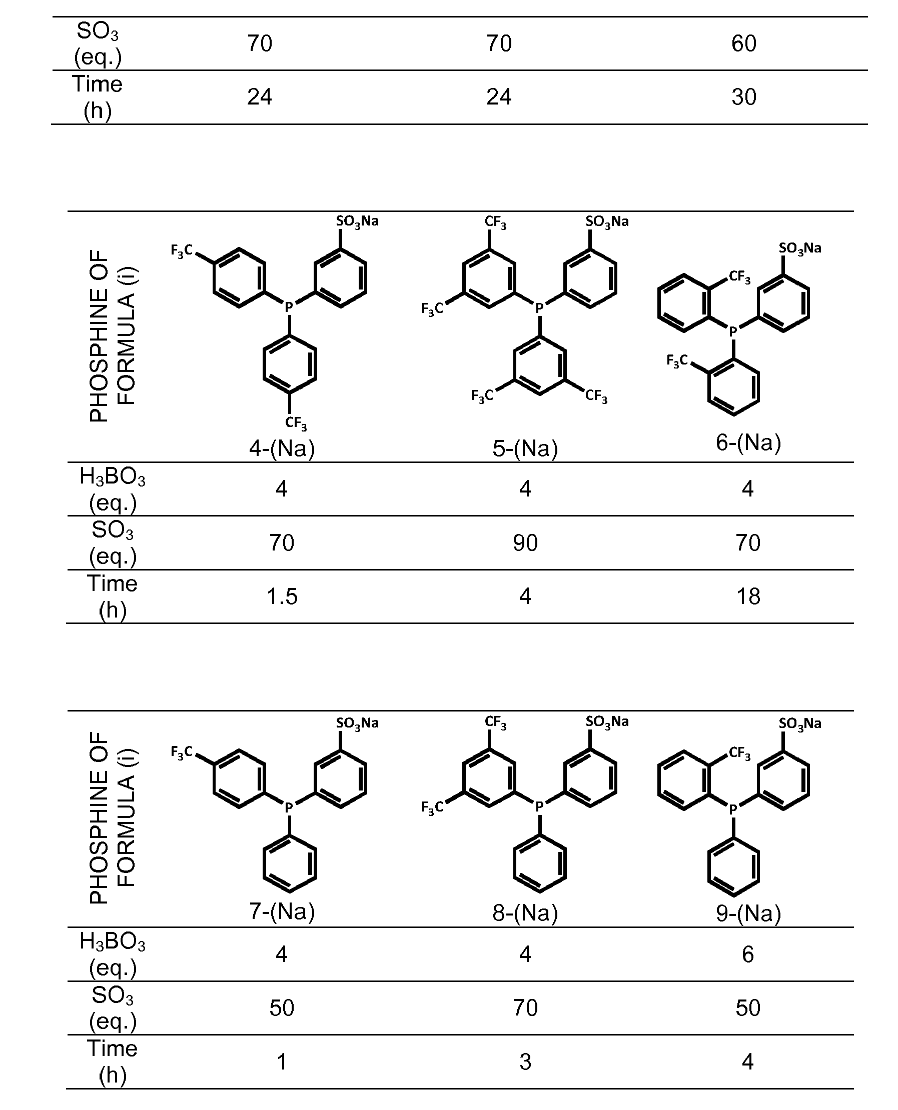

**Sodium 3,3'-((*p*-trifluoromethylphenyl)phosphinediyl)dibenzenesulfonate [1-(Na)]** 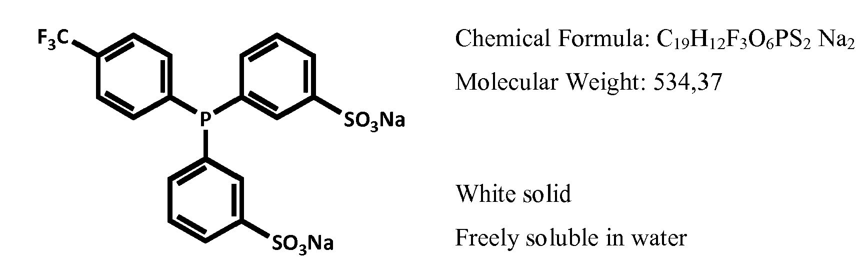 **NMR**
**¹H NMR: 400.13 MHz, CD₃OD,** δ **(ppm):** 7.92 (dtd, 2H, H_{C2}{C₆H₄SO₃Na}, ³J_{HP} = 8.3Hz - ⁴J_{HH} = 1.7Hz - ⁵J_{HH} = 0.5Hz); 7.72 (*b*d, 2H, H_{C6}{C₆H₄SO₃Na}, ³J_{HH} = 7.7Hz); 7.66 (*b*d, 2H, H_{C3}{C₆H₄CF₃}, ³J_{HH} = 8.0Hz); 7.47 (m, 4H, H_{C2} {C₆H₄CF₃} + H_{C5} {C₆H₄SO₃Na}); 7.37 (*b*t, 2H, H_{C4}{C₆H₄SO₃Na}, ³J_{HH} = ³J_{HP} = 7.7Hz).
**¹³C{¹H} NMR: 100.61 MHz, CD₃OD,** δ **(ppm):** 147.02 (d, C₁ {C₆H₄SO₃Na}, ³J_{CP} = 7.8Hz); 143.58 (d, C₁ {C₆H₄CF₃}, ¹J_{CP} = 13.9Hz); 137.71 (d, C3{C₆H₄SO₃Na}, ¹J_{CP} = 13.4Hz); 136.46 (d, C₄{C₆H₄SO₃Na}, ²J_{CP} = 17.2Hz); 134.98 (d, C₂{C₆H₄CF₃}, ²J_{CP} = 19.6Hz); 132.40 (d, C₂{C₆H₄SO₃Na}, ²J_{CP} = 25.3Hz); 131.88 (q, C₄{C₆H₄CF₃}, ²J_{CF} = 32.4Hz); 130.05 (d, C₅{C₆H₄SO₃Na}, ³J_{CP} = 6.1Hz) 128.14 (s, C₆{C₆H₄SO₃Na}); 126.43 (m, C₃{C₆H₄CF₃}); 125.55 (q, C{CF₃}, ¹J_{CF} = 271.5Hz).
**³¹P{¹H} NMR: 161.98 MHz, CD₃OD,** δ **(ppm):** -5.09 (s).
**¹⁹F{¹H} NMR: 376.50 MHz, CD₃OD,** δ **(ppm):** -62.07 (s).
**HRMS: ESI⁻ m/z**
[M-2Na⁺]/2 = 243.9884 exp.; 243.9888 calculated for C₁₉H₁₂F₃O₆PS₂.

### Sodium 3,3'-((3,5-bis(trifluoromethyl)phenyl)phosphinediyl)dibenzenesulfonate [2-(Na)]

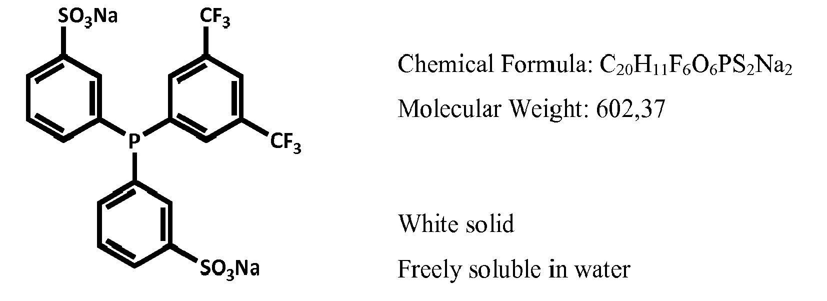

**NMR**
**¹H NMR: 400.13 MHz, CD₃OD,** δ **(ppm):** 7.97-7.90 (m, 5H, H_{C4}{C₆H₃(CF₃)₂} - H_{C2}-H_{C6}{C₆H₄SO₃Na}); 7.79 (*b*d, 2H, H_{C2}{C₆H₃(CF₃)₂}, ³J_{HP} = 6.8Hz); 7.53 (*b*t, 2H, H_{C5}{C₆H₄SO₃Na}, ³J_{HH} = 7.6Hz); 7.40 (tt, 2H, H_{C4}{C₆H₄SO₃Na}, ³J_{HH} = ³J_{HP} = 7_{.}6Hz - ⁴J_{HH} = 1.4Hz).
**¹³C{¹H} NMR: 90.55 MHz, CD₃OD,** δ **(ppm):** 147.32 (d, C₁ {C₆H₄SO₃Na}, ³J_{CP} = 8.3Hz); 143.06 (d, C₁{C₆H₃(CF₃)₂}, ¹J_{CP} = 19.2Hz); 136.55 (d, C₃{C₆H₄SO₃Na}, ¹J_{CP} = 13.1Hz); 136.43 (d, C₄{C₆H₄SO₃Na}, ²J_{CP} = 16.3Hz); 134.15 (*b*d, C₂{C₆H₃(CF₃)₂}, ²J_{CP} = 20.4Hz); 133.05 (qd, C₃{C₆H₃(CF₃)₂}, ²J_{CF} = 33.3Hz - ³J_{CP} = 5.8Hz); 132.54 (d, C₂{C₆H₄SO₃Na}, ²J_{CP} = 26.9Hz); 130.39 (d, C₅{C₆H₄SO₃Na}, ³J_{CP} = 6.0Hz); 128.65 (s, C₆{C₆H₄SO₃Na}); 124.59 (q, C{CF₃}, ¹J_{CF} = 272.4Hz); 123.83 (m, C₄{C₆H₃(CF₃)₂}).
**³¹P{¹H} NMR: 145.78 MHz, CD₃OD,** δ **(ppm):** -2.88 (s).
**¹⁹F{¹H} NMR: 235.39 MHz, CD₃OD,** δ **(ppm):** -62.31 (s).
**HRMS: ESI⁻ *m*/*z***
[M-2Na⁺]/2 = 277.9833 exp.; 277.9825 calculated for C₂₀H₁₁F₆O₆PS₂.

### Sodium 3,3'-((o-trifluoromethylphenyl)phosphinediyl)dibenzenesulfonate [3-(Na)]

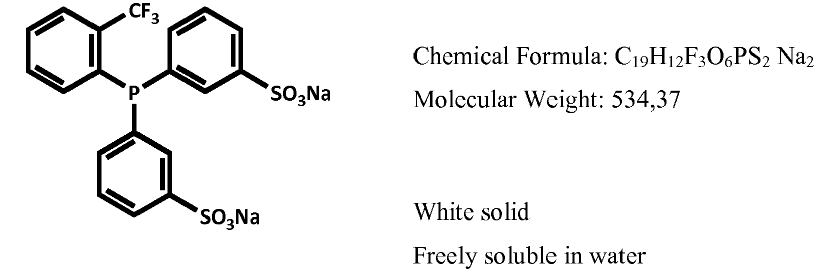

**NMR**
**¹H NMR: 360.13 MHz, CD₃OD,** δ **(ppm):** 7.86 (dt, 2H, Hc₆{C₆H₄SO₃Na}, ³J_{HH} = 6.9Hz - ⁴J_{HH} = 1.3Hz); 7.84-7.80 (m, 1H, H_{C3}{C₆H₄CF₃}); 7.76 (dt, 2H, H_{C2}{C₆H₄SO₃Na}, ³J_{HP} = 6.8Hz - ⁴J_{HH} = 1.3Hz); 7.61-7.51 (m, 2H, H_{C4}-H_{C5}{C₆H₄CF₃}); 7.47 (tdd, 2H, H_{C5}{C₆H₄SO₃Na}, ³J_{HH} = 6.9Hz - ⁴J_{HP} = 1.3Hz - ⁵J_{HH} = 0.4Hz); 7.31 (tt, 2H, H_{C4}{C₆H₄SO₃Na}, ³J_{HH} = ³J_{HP} = 6.9Hz - ⁴J_{HH} = 1.3Hz); 7.25-7.20 (m, 1H, Hc₆{C₆H₄CF₃}).
**¹³C{¹H} NMR: 100.61 MHz, CD₃OD,** δ **(ppm):** 146.60 (d, C₁{C₆H₄SO₃Na}, ³J_{CP} = 6.5Hz); 138.08 (*b*d, C₃{C₆H₄SO₃Na}, ¹J_{CP} = 15.5Hz); 137.49 (d, C₆{C₆H₄CF₃}, ²J_{CP} = 1.9Hz); 136.54 (d, C₄{C₆H₄SO₃Na}, ²J_{CP} = 20.2Hz); 136.34 (d, C₁{C₆H₄CF₃}, ¹J_{CP} = 29.2Hz); 135.91 (qd, C₂{C₆H₄CF₃}, ²J_{CF} = 30.1Hz - ²J_{CP} = 25.9Hz); 133.38 (s, C₅{C₆H₄CF₃}); 131.90 (d, C₂{C₆H₄SO₃Na}, ²J_{CP} = 22.7Hz); 130.99 (s, C₄{C₆H₄CF₃}); 130.01 (d, C₅{C₆H₄SO₃Na}, ³J_{CP} = 6.4Hz); 127.90 (s, C₆{C₆H₄SO₃Na}); 127.70 (m, C₃{C₆H₄CF₃}); 125.78 (q, C{CF₃}, ¹J_{CF} = 274.6Hz).
**³¹P{¹H} NMR: 145.78 MHz, CD₃OD,** δ **(ppm):** -10.52 (q, ⁴J_{PF} = 53.9Hz).
**¹⁹F{¹H} NMR: 235.39 MHz, CD₃OD,** δ **(ppm):** -55.81 (d, ⁴J_{FP} = 53.9Hz).
**HRMS: ESI⁻ *m*/*z***
[M-Na⁺] = 510.9669 exp.; 510.9668 calculated for C₁₉H₁₂F₃O₆PS₂Na.

### Sodium 3-(bis(p-trifluoromethylphenyl)phosphino)benzenesulfonate [4-(Na)]

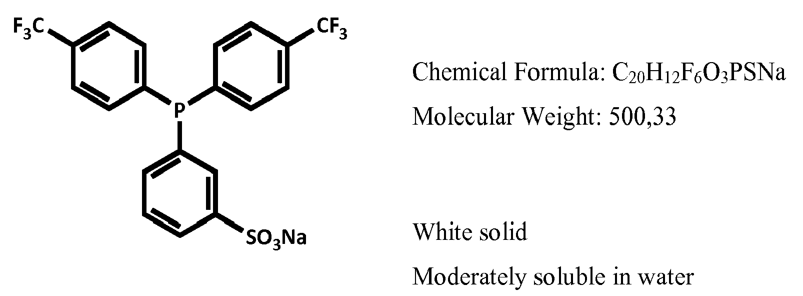

**NMR**
**¹H NMR: 400.13 MHz, CD₃OD,** δ **(ppm):** 7.92-7.87 (m, 2H, H_{C2}{C₆H₄SO₃Na} + Hc₆{C₆H₄SO₃Na}); 7.70 (*b*d, 4H, H_{C3}{C₆H₄CF₃}, ³J_{HH} = 7.9Hz); 7.53-7.41 (m, 6H, H_{C2}{C₆H₄CF₃} + H_{C4}{C₆H₄SO₃Na} + H_{C5}{C₆H₄SO₃Na}).
**¹³C{¹H} NMR: 62.90 MHz, CD₃OD,** δ **(ppm):** 147.19 (d, C₁{C₆H₄SO₃Na}, ³J_{CP} = 6.9Hz); 142.84 (d, C₁ {C₆H₄CF₃}, ¹J_{CP} = 14.8Hz); 137.08 (d, C3{C₆H₄SO₃Na}, ¹J_{CP} = 13.5Hz); 136.77 (d, C₄{C₆H₄SO₃Na}, ²J_{CP} = 21.5Hz); 135.17 (d, C₂{C₆H₄CF₃}, ²J_{CP} = 20.3Hz); 132.30 (d, C₂{C₆H₄SO₃Na}, ²J_{CP} = 21.7Hz); 132.22 (q, C₄{C₆H₄CF₃}, ²J_{CF} = 32.6Hz); 130.14 (d, C5{C₆H₄SO₃Na}, ³J_{CP} = 7.4Hz); 128.40 (s, C₆{C₆H₄SO₃Na}); 126.56 (dq, C₃{C₆H₄CF₃}, ³J_{CP} = 7.2Hz - ³J_{CF} = 3.7Hz); 125.45 (q, C{CF₃}, ¹J_{CF} = 271.5Hz).
**³¹P{¹H} NMR: 161.98 MHz, CD₃OD,** δ **(ppm):** -5.98 (s).
**¹⁹F{¹H} NMR: 376.50 MHz, CD₃OD,** δ **(ppm):** -62.10 (s).
**HRMS: ESI⁻ *m*/*z***
[M-Na⁺] = 477.0144 exp.; 477.0143 calculated for C₂₀H₁₂F₆O₃PS

### Sodium 3-(bis(3,5-bis(trifluoromethyl)phenyl)phosphino)benzenesulfonate [5-(Na)]

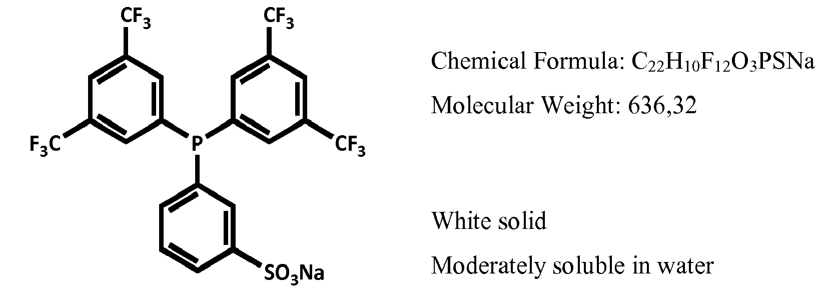

**NMR**
**¹H NMR: 400.13 MHz, CD₃OD,** δ **(ppm):** 8.24 (*b*m, 2H, H_{C4}{C₆H₃(CF₃)₂}); 8.16 (dddd, 1H, H_{C6}{C₆H₄SO₃Na}, ³J_{HH} = 7.7Hz - ⁴J_{HH} = 1.7Hz - ⁴J_{HH} = 1. 1 H, - ⁵J_{HP} = 5 0.8Hz); 8.09 (dtd, 1H, H_{C2}{C₆H₄SO₃Na}*,* ³J_{HP} = 8.7Hz - ⁴J_{HH} = 1.7Hz - ⁵J_{HH} = 0.6Hz); 8.03 (m, 4H, H_{C2}{C₆H₃(CF₃)₂}); 7.77 (tdd, 1 H, H_{C5}{C₆H₄SO₃Na}, ³J_{HH} = 7.7Hz - ⁴J_{HP} = 1.4Hz - ⁵J_{HH} = 0.6Hz); 7.64 (tdd, 1H, H_{C4}{*m*-C₆H₄SO₃Na}, ³J_{HH} = ³J_{Hp} = 7.7Hz - ⁴J_{HH} = 1.7Hz - ⁴J_{HH} = 1.1Hz).
**¹³C{¹H} NMR: 90.55 MHz, CD₃OD,** δ **(ppm):** 147.69 (d, C₁{C₆H₄SO₃Na}, ³J_{CP} = 10 8.0Hz); 141.19 (d, C₁{C₆H₃(CF₃)₂}, ¹J_{CP} = 19.2Hz); 136.68 (d, C₄{C₆H₄SO₃Na}, ²J_{CP} = 19.6Hz); 135.15 (d, C₃{C₆H₄SO₃Na}, ¹J_{CP} = 13.4Hz); 134.50 (*b*d, C₂{C₆H₃(CF₃)₂}, ²J_{CP} = 20.2Hz); 133.40 (qd, C₃{C₆H₃(CF₃)₂}, ²J_{CF} = 33.7Hz - ³J_{CP} = 6.2Hz); 132.56 (d, C₂{C₆H₄SO₃Na}, ²J_{CP} = 24.9Hz); 130.79 (d, C₅{C₆H₄SO₃Na}, ³J_{CP} = 6.9Hz); 129.27 (s,
C₆{C₆H₄SO₃Na}); 124.56 (sept., C₄{C₆H₃(CF₃)₂}, ³J_{CF} = 3.5Hz); 124.48 (q, C{CF₃}, 15 ¹J_{CF} = 272.3Hz).
**³¹P{¹H} NMR: 145.78 MHz, CD₃OD,** δ **(ppm):** -4.71 (s).
**¹⁹F{¹H} NMR: 235.39 MHz, CD₃OD,** δ **(ppm):** -62.34 (s).
**HRMS: ESI⁻ *m*/*z***
[M-Na⁺] = 612.9912 exp.; 612.9902 calculated for C₂₂H₁₀F₁₂O₃PS. 20

### Sodium 3-(bis(o-trifluoromethylphenyl)phosphino)benzenesulfonate [6-(Na)]

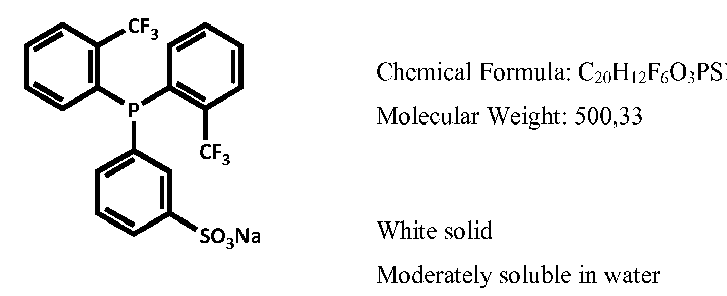

**NMR**
**¹H NMR: 360.13 MHz, CD₃OD,** δ **(ppm):** 7.87 (dt, 1H, H_{C6}{C₆H₄SO₃Na}, ³J_{HH} = 7.7Hz - ⁴J_{HH} = 1.4Hz); 7.84-7.78 (m, 2H, H_{C3}{C₆H₄CF₃}); 7.67 (dt, 1H, H_{C2}{C₆H₄SO₃Na}, ³J_{HP} = 7.2Hz - ⁴J_{HH} = 1.4Hz); 7.61-7.50 (m, 4H, H_{C4}-H_{C5}{C₆H₄CF₃}); 7.46 (td, 1H, H_{C5}{C₆H₄SO₃Na}, ³J_{HH} = 7.7Hz - ⁴J_{HP} = 1.2Hz); 7.23 (tt, 1 H, H_{C4}{C₆H₄SO₃Na}, ³J_{HH} = ³J_{HP} = 7.7Hz - ⁴J_{HH} = 1.4Hz); 7.11-7.04 (m, 2H, H_{C6}{C₆H₄CF₃}).
**¹³C{¹H} NMR: 90.56 MHz, CD₃OD,** δ **(ppm):** 147.04 (d, C₁ {C₆H₄SO₃Na}, ³J_{CP} = 6.1Hz); 137.39 (d, C₃{C₆H₄SO₃Na}, ¹J_{CP} = 11.6Hz); 137.32 (s, C₆{C₆H₄CF₃}); 136.64 (d, C₄{C₆H₄SO₃Na}, ²J_{CP} = 23.5Hz); 136.21 (d, C₁ {C₆H₄CF₃}, ¹J_{CP} = 29.7Hz); 135.40 (qd, C₂{C₆H₄CF₃}, ²J_{CF} = 30.5Hz - ²J_{CP} = 25.8Hz); 133.21 (s, C₅{C₆H₄CF₃}); 132.18 (d, C₂{C₆H₄SO₃Na}, ²J_{CP} = 21.6Hz); 130.81 (s, C₄{C₆H₄CF₃}); 129.93 (d, C₅{C₆H₄SO₃Na}, ³J_{CP} = 7.3Hz); 128.02 (s, C₆{C₆H₄SO₃Na}); 127.91 (m, C₃{C₆H₄CF₃}); 125.70 (q, C{CF₃}, ¹J_{CF} = 274.5Hz).
**³¹P{¹H} NMR: 145.78 MHz, CD₃OD,** δ **(ppm):** -13.57 (q, ⁴J_{PF} = 53.4Hz).
**¹⁹F{¹H} NMR: 235.39 MHz, CD₃OD,** δ **(ppm):** -56.28 (d, ⁴J_{FP} = 53.4Hz).
**HRMS: ESI⁻ *m*/*z***
[M-Na⁺] = 477.0155 exp.; 477.0154 calculated for C₂₀H₁₂F₆O₃PS.

### Sodium 3-(phenyl(p-trifluoromethylphenyl)phosphino)benzenesulfonate [7-(Na)]

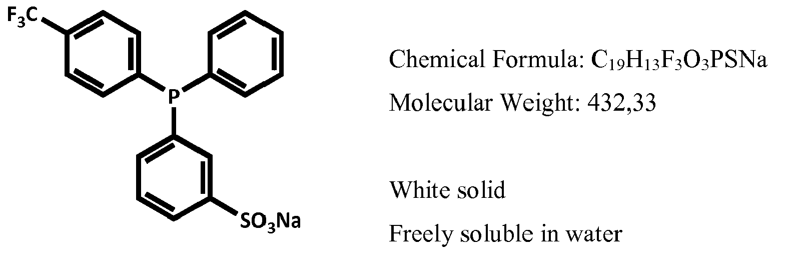

**NMR**
**¹H NMR: 400.13 MHz, CD₃OD,** δ **(ppm):** 7.86 (*b*d, 1H, H_{C6}{C₆H₄SO₃Na}, ³J_{HH} = 7.5Hz); 7.85 (*b*d, 1H, H_{C2}{C₆H₄SO₃Na}, ³J_{HP} = 7.3Hz); 7.64 (*b*d, 2H, H_{C3}{C₆H₄CF₃}, ³J_{HH} = 7.3Hz); 7.50-7.30 (m, 9H, H_{C2}{C₆H₄CF₃} + H_{C4}-H_{C5}{C₆H₄SO₃Na} + H_{C2}-H_{C3}-H_{C4}{C₆H₅}).
**¹³C{¹H} NMR: 100.61 MHz, CD₃OD,** δ **(ppm):** 146.87 (d, C₁{C₆H₄SO₃Na}, ³J_{CP} = 6.7Hz); 144.18 (d, C₁{C₆H₄CF₃}, ¹J_{CP} = 15.1Hz); 138.30 (d, C3{C₆H₄SO₃Na}, ¹J_{CP} = 13.6Hz); 136.75 (d, C₁{C₆H₅}, ¹J_{CP} = 10.6Hz); 136.54 (d, C₄{C₆H₄SO₃Na}, ²J_{CP} = 20.1Hz); 135.12 (d, C₂{C₆H₅}, ²J_{CP} = 20.7Hz); 134.84 (d, C₂{C₆H₄CF₃}, ²J_{CP} = 19.4Hz); 132.11 (d, C₂{C₆H₄SO₃Na}, ²J_{CP} = 21.6Hz); 131.67 (q, C₄{C₆H₄CF₃}, ²J_{CF} = 32.3Hz); 130.64 (s, C₄{C₆H₅}); 130.01 (d, C₃{C₆H₅}, ³J_{CP} = 7.4Hz); 129.86 (d, C₅{C₆H₄SO₃Na}, ³J_{CP} = 6.8Hz); 127.91 (s, C₆{C₆H₄SO₃Na}); 126.26 (dq, C₃{C₆H₄CF₃}, ³J_{CP} = 6.5Hz - ³J_{CF} = 3.8Hz); 125.54 (q, C{CF₃}, ¹J_{CF} = 271.4Hz).
**³¹P{¹H} NMR: 101.27 MHz, CD₃OD,** δ **(ppm):** -3.71 (s).
**¹⁹F{¹H} NMR: 235.39 MHz, CD₃OD,** δ **(ppm):** -63.04 (s).
**HRMS: ESI⁻ *m*/*z***
[M-Na⁺] = 409.0290 exp.; 409.0281 calculated for C₁₉H₁₃F₃O₃PS.

### Sodium 3,-((3,5-bis(trifluoromethyl)phenyl)(phenyl)phosphino)benzenesulfonate [8-(Na)]

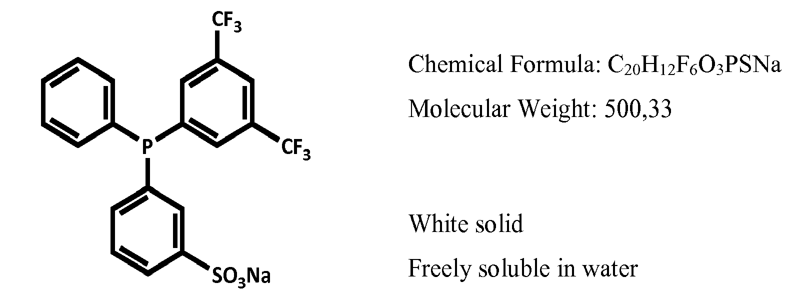

**NMR**
**¹H NMR: 400.13 MHz, CD₃OD,** δ **(ppm):** 7.94 (*b*s, 1H, H_{C4}{C₆H₃(CF₃)₂}); 7.91 (m, 1H, H_{C6}{C₆H₄SO₃Na}); 7.86 (dtd, 1H, H_{C2}{C₆H₄SO₃Na}, ³J_{HP} = 8.0Hz - ⁴J_{HH} = 1.7Hz - ⁵J_{HH} = 0.5Hz); 7.72 (*b*d, 2H, H_{C2}{C₆H₃(CF₃)₂}, ³J_{HP} = 6.2Hz); 7.52 (tdd, 1H, H_{C5}{C₆H₄SO₃Na}, ³J_{HH} = 7.7Hz - ⁴J_{HP} = 1.4Hz - ⁵J_{HH} = 0.5Hz); 7.49-7.43 (m, 3H, H_{C3}-H_{C4}{C₆H₅}); 7.43-7.33 (m, 3H, H_{C2}{C₆H₅} - H_{C4}{*m*-C₆H₄SO₃Na}).
**¹³C{¹H} NMR: 90.55 MHz, CD₃OD,** δ **(ppm):** 147.23 (d, C₁{C₆H₄SO₃Na}, ³J_{CP} = 7.2Hz); 143.74 (d, C₁{C₆H₃(CF₃)₂}, ¹J_{CP} = 19.4Hz); 137.11 (d, C₃{C₆H₄SO₃Na}, ¹J_{CP} = 13.4Hz); 136.46 (d, C₄{C₆H₄SO₃Na}, ²J_{CP} = 19.6Hz); 135.61 (d, C₁{C₆H₅}, ¹J_{CP} = 10.5Hz); 135.11 (d, C₂{C₆H₅}, ²J_{CP} = 21.1Hz 134.03 (*b*d, C₂{C₆H₃(CF₃)₂}, ²J_{CP} = 20.1Hz); 132.91 (qd, C₃{C₆H₃(CF₃)₂}, ²J_{CF} = 33.3Hz - ³J_{CP} = 5.6Hz); 132.23 (d, C₂{C₆H₄SO₃Na}, ²J_{CP}=23.0Hz); 131.22 (s, C₄{C₆H₅}); 130.35 (d, C₃{C₆H₅}, ³J_{CP} = 7.5Hz); 130.20 (d, C₅{C₆H₄SO₃Na}, ³J_{CP} = 6.8Hz); 128.43 (s, C₆{C₆H₄SO₃Na}); 124.62 (q, C{CF₃}, ¹J_{CF} = 272.1Hz); 123.54 (m, C₄{C₆H₃(CF₃)₂}).
**³¹P{¹H} NMR: 145.78 MHz, CD₃OD,** δ **(ppm):** -3.18 (s).
**¹⁹F{¹H} NMR: 235.39 MHz, CD₃OD,** δ **(ppm):** -64.98 (s).
**HRMS: ESI⁻ *m*/*z***
[M-Na⁺] = 477.0146 exp.; 477.0154 calculated for C₂₀H₁₂F₆O₃PS.

### Sodium 3-(phenyl(o-trifluoromethylphenyl)phosphino)benzenesulfonate [9-(Na)]

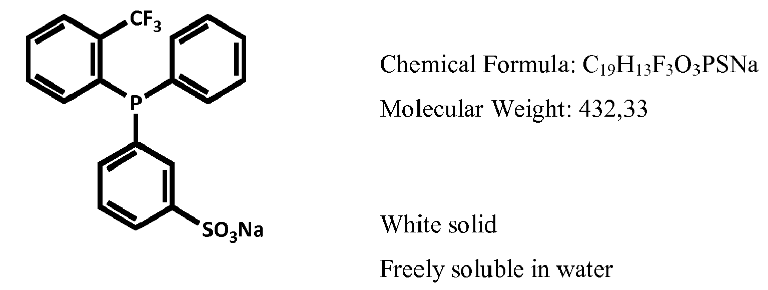

**NMR**
**¹H NMR: 600.13 MHz, CD₃OD,** δ **(ppm):** 7.84 (dt, 1H, H_{C6}{C₆H₄SO₃Na}, ³J_{HH} = 7.7Hz - ⁴J_{HH} = 1.4Hz); 7.82-7.79 (m, 1H, H_{C3}{C₆H₄CF₃}); 7.75 (dt, 1H, H_{C2}{C₆H₄SO₃Na}, ³J_{HP} = 7.3Hz - ⁴J_{HH} = 1.4Hz); 7.56 (*b*t, 1H, H_{C4}{C₆H₄CF₃}, ³J_{HH} = 7.4Hz); 7.52 (*b*t, 1H, H_{C5}{C₆H₄CF₃}, ³J_{HH} = 7.4Hz); 7.44 (td, 1H, H_{C5}{C₆H₄SO₃Na}, ³J_{HH} = 7.7Hz - ⁴J_{HP} = 1.4Hz); 7.40-7.34 (m, 3H, H_{C3}-H_{C4}{C₆H₅}); 7.27 (tt, 1H, H_{C4}{C₆H₄SO₃Na}, ³J_{HH} = ³J_{HP} = 7.7Hz - ⁴J_{HH} = 1.4Hz); 7.25-7.20 (m, 3H, H_{C6}{C₆H₄CF₃} + H_{C2}{C₆H₅}).
**¹³C{¹H} NMR: 62.90 MHz, CD₃OD,** δ **(ppm):** 146.80 (d, C₁{C₆H₄SO₃Na}, ³J_{CP} = 6.2Hz); 138.61 (d, C₃{C₆H₄SO₃Na}, ¹J_{CP} = 14.8Hz); 137.45 (d, C₆{C₆H₄CF₃}, ²J_{CP} = 1.9Hz); 137.21 (d, C₁{C₆H₄CF₃}, ¹J_{CP} = 30.4Hz); 137.04 (d, C₁{C₆H₅} ¹J_{CP} = 11.4Hz); 136.25 (d, C₄{C₆H₄SO₃Na}, ²J_{CP} = 20.4Hz); 135.81 (qd, C₂{C₆H₄CF₃}, ²J_{CF} = 30.2Hz - ²J_{CP} = 25.5Hz); 134.73 (d, C₂{C₆H₅}, ²J_{CP} = 20.8Hz); 133.14 (s, C₅{C₆H₄CF₃}); 131.86 (d, C₂{C₆H₄SO₃Na}, ²J_{CP} = 21.6Hz); 130.66 (s, C₄{C₆H₄CF₃}); 130.28 (s, C₄{C₆H₅}); 129.86 (d, C₃{C₆H₅}, ³J_{CP} = 7.0Hz); 129.69 (d, C₅{C₆H₄SO₃Na}, ³J_{CP} = 6.6Hz); 127.64 (s, C₆{C₆H₄SO₃Na}); 127.52 (m, C₃{C₆H₄CF₃}); 125.81 (q, C{CF₃}, ¹J_{CF} = 274.5Hz). **³¹P{¹H} NMR: 101.27 MHz, CD₃OD,** δ **(ppm):** -9.84 (q, ⁴J_{PF} = 54.0Hz).
**¹⁹F{¹H} NMR: 376.50 MHz, CD₃OD,** δ **(ppm):** -55.86 (d, ⁴J_{FP} = 52.7Hz).
**HRMS: ESI⁻ *m*/*z***
[M-Na⁺] = 409.0281 exp.; 409.0281 calculated for C₁₉H₁₃F₃O₃PS.

### 3. Determination of water solubility of trifluoromethylated sulfonated phosphines of Formula (I)

Oversaturated aqueous solutions of the sodium salts of the phosphines of Formula (I) were prepared. The supernatant solution was ultracentrifugated, and then filtered through a nylon filter, a measured weight of this solution was evaporated to dryness and the solid residue was weighed.

The resulting solubilities are showed below:

| **Phosphine** | **Solubility (g/100mL)** |
|---|---|
| **1** | 7 |
| **2** | 70 |
| **3** | 3 |
| **4** | 0.2 - 1.2 |
| **5** | 0.2 - 1.2 |
| **6** | 0.2 - 1.2 |
| **7** | 50 |
| **8** | >100 |
| **9** | 21 |

### 4. Aerial oxidation of the phosphines in aqueous solution

Solutions in distilled water (1 mL, 5.10⁻² mM ) of the phosphines represented below were prepared with the aim of comparing their inertness against aerial oxidation. The solutions were kept opened to air under vigorous stirring for 120 h. Aliquots were taken and analyzed by ³¹P{¹H} NMR in order to quantify the oxidation progress. The results show that the presence of trifluormethyl groups decreases the oxidation rate of the phosphine in a factor greater than 10.

### Monosulfonated phosphines

| **Oxidation percentage over time** | | | |
|---|---|---|---|
| Phosphine | 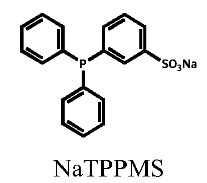 | 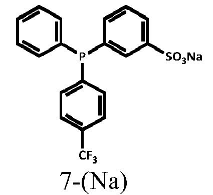 | 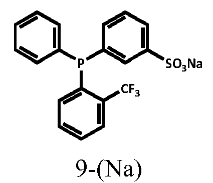 |
| 0 h | 0% | 0% | 0% |
| 16h | 4% | 0% | 0% |
| 40 h | 25% | 0% | 0% |
| 120 h | 68% | 4% | 0% |

### Disulfonated phosphines

| **Oxidation percentage over time** | | |
|---|---|---|
| Phosphine | 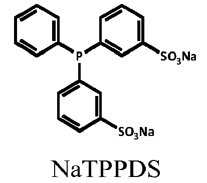 | 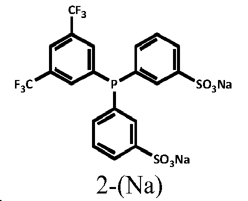 |
| 0 h | 0% | 0% |
| 16 h | 6% | 0% |
| 40 h | 33% | 1% |
| 120 h | 100% | 2% |

## Claims

1. A triphenylphosphine of Formula (I) 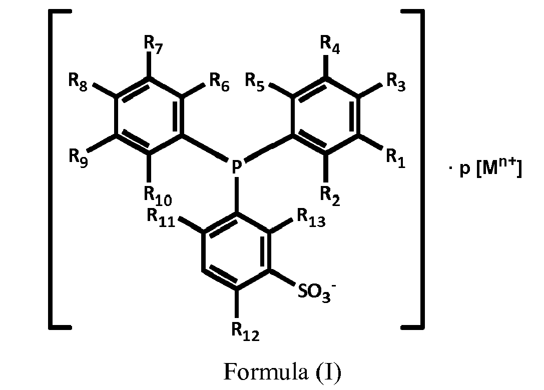 wherein
M is a proton or a monovalent or divalent cation,
n is an integer selected from 1 and 2,
p takes a value selected from ¹/₂, 1 and 2,
R₁ is selected from H, C₁-C₆ alkyl, CF₃ and SO₃⁻, R₁₁, R₁₂ and R₁₃ are independently selected from Hand C₁-C₆ alkyl, with the proviso that
if R₁ is SO₃⁻, then
the product of n and p is equal to 2, R₂, R₃ and R₅ are independently selected from Hand C₁-C₆ alkyl, R₄ is H,
R₆-R₁₀ are independently selected from H, C₁-C₆ alkyl and CF₃, at least one of R₆-R₁₀ being CF₃;
if R₁ is not SO₃⁻, then
the product of n and p is equal to 1,
R₁-R₁₀ are independently selected from H, C₁-C₆ alkyl and CF₃, at least one of the groups R₁-R₁₀ being CF₃.

2. A triphenylphosphine according to claim 1 having Formula (I') 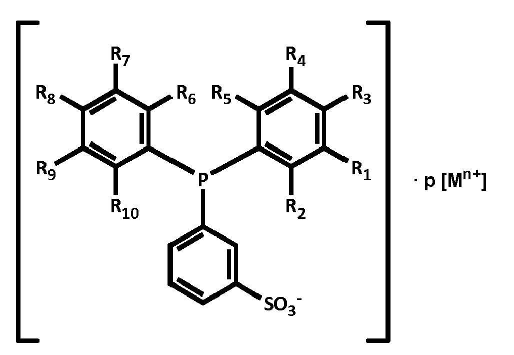 Formula (I')
wherein
M is a proton or a monovalent or divalent cation,
n is an integer selected from 1 and 2,
p takes a value selected from ¹/₂, 1 and 2,
R₁ is selected from H, CF₃ and SO₃⁻, with the proviso that
if R₁ is SO₃⁻, then the product of n and p is equal to 2, R₂-R₅ are H and R₆-R₁₀ are independently selected from H and CF₃, at least one of R₆-R₁₀ being CF₃;
if R₁ is not SO₃⁻, then the product of n and p is equal to 1, R₁-R₁₀ are independently selected from H and CF₃, at least one of the groups R₁-R₁₀ being CF_{3.}

3. A triphenylphosphine according to claim 1 having Formula (Ia) 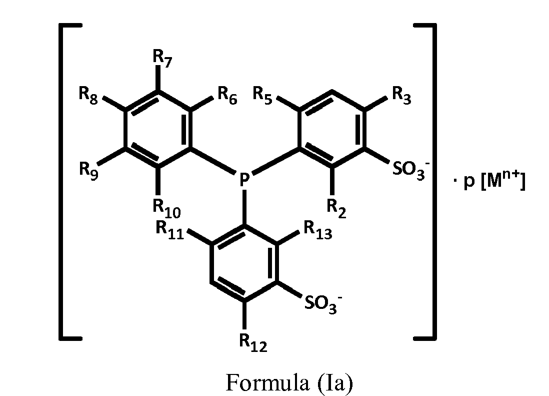 wherein
M is a proton or a monovalent or divalent cation,
n is an integer selected from 1 and 2,
p takes a value selected from 1 and 2,
R₂, R₃, R₅, R₁₁, R₁₂ and R₁₃ are independently selected from H and C₁-C₆ alkyl, R₆-R₁₀ are independently selected from H, C₁-C₆ alkyl and CF₃, at least one of R₆-R₁₀ being CF₃.

4. A triphenylphosphine according to claim 3, wherein R₂, R₃, R₅, R₁₁, R₁₂ and R₁₃ are H and R₆-R₁₀ are independently selected from H and CF₃, at least one of R₆-R₁₀ being CF₃.

5. A triphenylphosphine according to claim 1 having Formula (Ib) 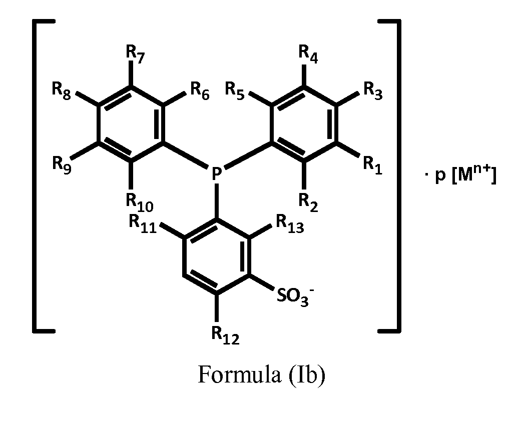 wherein
M is a proton or a monovalent or divalent cation,
n is an integer selected from 1 and 2,
p takes a value selected from ¹/₂ and 1,
R₁₁, R₁₂ and R₁₃ are independently selected from Hand C₁-C₆ alkyl, R₁-R₁₀ are independently selected from H, C₁-C₆ alkyl and CF₃, at least one of the groups R₁-R₁₀ being CF₃.

6. A triphenylphosphine according to claim 5, wherein R₁₁, R₁₂ and R₁₃ are H and R₁-R₁₀ are independently selected from H and CF₃, at least one of the groups R₁-R₁₀ being CF₃.

7. A triphenylphosphine according to claim 1 which is selected from one of the following compounds: 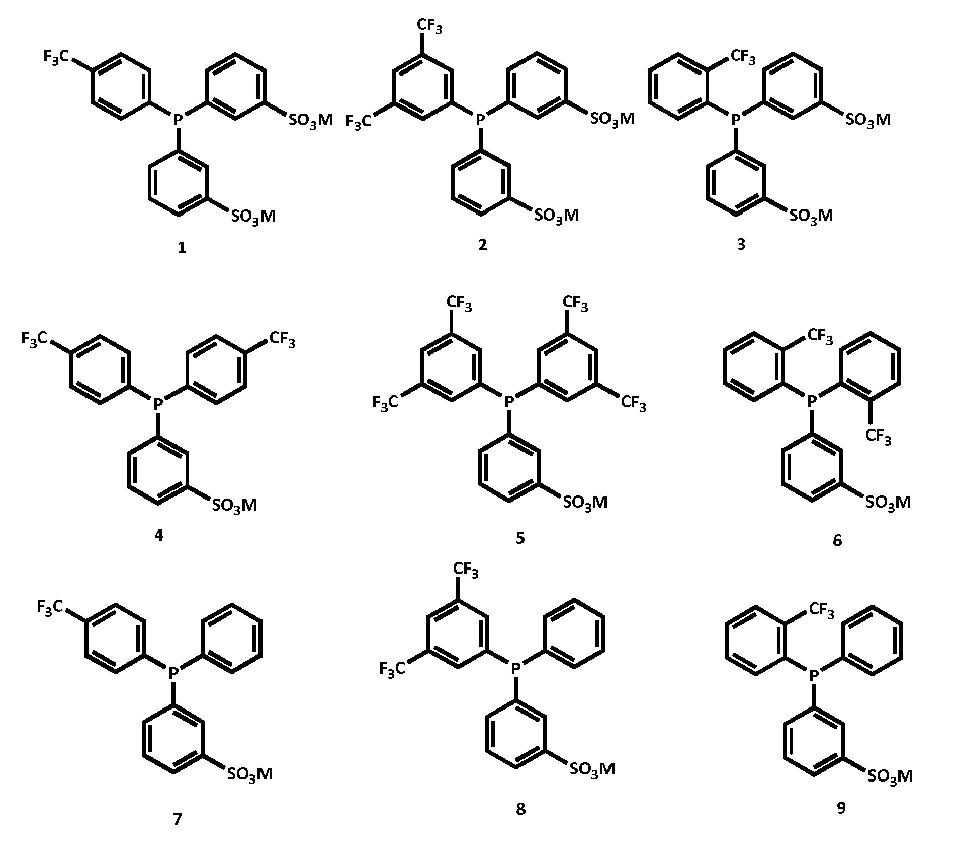 wherein M is a proton or a monovalent or divalent cation.

8. A process for obtaining a tryphenylphosphine of Formula (I) as defined in any of claims 1 to 7, which comprises the reaction between a compound of Formula (II) 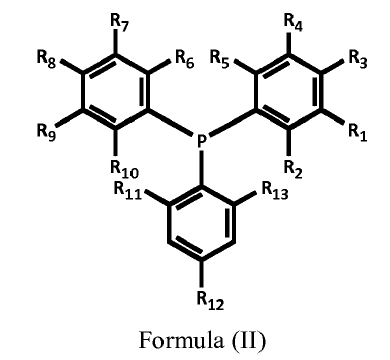 wherein
R₁-R₁₀ are independently selected from H, C₁-C₆ alkyl and CF₃, at least one of the groups R₁-R₁₀ being CF₃,
R₁₁, R₁₂ and R₁₃ are independently selected from H and C₁-C₆ alkyl, and a sulfonation reagent in presence of a Lewis acid.

9. The process according to claim 8 wherein said Lewis acid is a boron compound.

10. The process according to claim 9 wherein said boron compound is boric acid.

11. Use of a tryphenylphosphine of Formula (I) as defined in claim 1 as metal ligand in catalysis.

12. Use of a tryphenylphosphine of Formula (I) as defined in claim 1 in the stabilization of nanoparticles.
